(19) Europäisches Patentamt
European Patent Office
Office européen des brevets

(11) Veröffentlichungsnummer: **0 251 117 B1**

(12) **EUROPÄISCHE PATENTSCHRIFT**

(45) Veröffentlichungstag der Patentschrift: **24.01.90**

(51) Int. Cl.⁴: **G11B 7/24**

(21) Anmeldenummer: **87108947.0**

(22) Anmeldetag: **23.06.87**

(54) **Optische Aufzeichnungsmedien.**

(30) Priorität: **02.07.86 DE 3622138**

(43) Veröffentlichungstag der Anmeldung: **07.01.88 Patentblatt 88/1**

(45) Bekanntmachung des Hinweises auf die Patenterteilung: **24.01.90 Patentblatt 90/4**

(84) Benannte Vertragsstaaten: **CH DE FR GB IT LI**

(56) Entgegenhaltungen:
**EP-A- 0 174 383**
**EP-A- 0 193 892**
**EP-A- 0 218 263**

**ZEITSCHRIFT FÜR CHEMIE, 24. Jahrgang, 1984, Nr. 4; VEB DEUTSCHER VERLAG FÜR GRUNDSTOFFINDUSTRIE. "Zum Reaktionsverhalten substituierter 2-Formylmethylen-2H-thio-und-selenopyrane-Darstellung symmetrischer Polymethinfarbstoffe", Seiten 146-147**

(73) Patentinhaber: **BASF Aktiengesellschaft, Carl-Bosch-Strasse 38, D-6700 Ludwigshafen(DE)**

(72) Erfinder: **Dust, Matthias, Dr., Bismarckplatz 15-17, D-6800 Mannheim 1(DE)**
Erfinder: **Neumann, Peter, Dr., 1 Franz-Schubert-Strasse, D-6908 Wiesloch(DE)**

**EP 0 251 117 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Optische Aufzeichnungsträger/Aufzeichnungsmedien zur Speicherung von Daten sind bekannt. Das Aufzeichnen der Daten erfolgt durch Licht bestimmter Wellenlängen und Intensität oder mit anderen geeigneten energiereichen Strahlen. Durch Absorption der Strahlung tritt an der bestrahlten Stelle lokal Erwärmung ein. Dabei kann je nach der Schicht der Farbstoff verfärbt oder zerstört (entfärbt) werden. Weiterhin können in der Oberfläche des Trägers an der bestrahlten Stelle durch Verdampfen, Erweichen/Schmelzen Vertiefungen erzeugt werden. Beim Abtasten des Trägers tritt dann an den "beschriebenen" Stellen eine Änderung der Intensität des reflektierten Lichtes ein.

Der Träger kann eine Platte aus Glas oder geeigneten Kunststoffen wie Polymethylmethacrylat, Polystyrol oder Polycarbonat sein.

In der US-A 40 97 895 wird ein Aufzeichnungsträger beschrieben, der auf einer Schicht aus einem lichtreflektierenden Material, z.B. Aluminium oder Gold, mit einer lichtabsorbierenden Schicht, z.B. Fluoreszein, bedeckt ist. Dieser Aufzeichnungsträger kann mit Licht eines Argonlasers beschrieben und gelesen werden. Die Dicke der lichtabsorbierenden Schicht wird so gewählt, daß die Struktur ein minimales Reflexionsvermögen besitzt. Der auffallende Laserstrahl löst beim Einschreiben die absorbierende Schicht ab, verdampft oder schmilzt sie, wobei ein Loch entsteht, in dem die lichtreflektierende Schicht freigelegt ist. Nach dem Beschreiben ergibt sich für die Wellenlänge des zur Aufnahme benutzten Lichts ein Unterschied zwischen dem minimalen Reflexionsvermögen der lichtabsorbierenden Schicht und dem höheren Reflexionsvermögen der lichtreflektierenden Schicht. Wenn sich das lichtreflektierende Material als dünne Schicht auf einem nur wenig wärmeleitenden Substrat befindet, ist der Energieverlust durch Reflexion an der dünnen absorbierenden Schicht und auch wegen der geringen Wärmeleitung des Substrates gering.

Aus der US-A-4 242 689 ist ein Aufzeichnungsträger bekannt, der Di-indenoperylen als lichtabsorbierende Schicht enthält. Dieser Träger kann mit einem Argonlaser beschrieben werden.

In der US-A-4 023 185 werden Aufzeichnungsträger beschrieben, bei denen die lichtabsorbierende Schicht durch Aufdampfen der Farbstoffe C.I. Solvent Black 3, C.I. Nr. 26 150 erhalten wird. Diese Aufzeichnungsträger können mit einem Argonlaser beschrieben werden.

Aus der US-A-4 380 769 sind weitere mit einem Argonlaser beschreibbare Aufzeichnungsträger bekannt, deren lichtabsorbierende Schicht ein Polymer mit darin gelösten Azofarbstoffen und/oder Cumarinverbindungen ist.

Die DE-A-3 007 296 betrifft ein System zur Datenaufzeichnung, das einen an ein Polymer gebundenen indigoiden photochromen Farbstoff mit einem Absorptionsmaximum bei 545 nm enthält.

Die JP-A-112 793/1983 lehrt die Verwendung von Triphenylmethanfarbstoffen als Licht absorbierende Schicht in optischen Aufzeichnungssystemen.

Weiterhin sind optische Speichersysteme bekannt, die als absorbierende Verbindungen Oxazine (JP-A-132 231/1983), Cyaninfarbstoffe (JP-A-112 790/1983 und 125 246/1983), Phthalocyaninverbindungen (EP-A-84 729, US-A-4 241 355, JP-A-56 892/1983) und Naphthochinon 1,4-Verbindungen, die Substituenten mit Donorwirkung tragen (JP-A-112 793/1983), enthalten. Diese Speicher können mit einem He-Ne-Laser (633 nm) beschrieben werden.

Schließlich ist in der DE-A-3 014 677 ein optisches Aufzeichnungsmedium beschrieben, das als Farbstoff, 1,4-Diamino-2-methoxy-anthrachinon in einer Polymermatrix gelöst enthält.

Materialien, die als lichtabsorbierende Schicht des Aufzeichnungsträgers verwendet werden sollen, müssen in Form einer dünnen, glatten Schicht hoher optischer Qualität und vorbestimmter Dicke auf geeignete Träger aufzubringen sein. Die Materialien müssen ferner bei der Wellenlänge der verwendeten Lichtquelle absorbieren und hinreichend empfindlich sein, d.h., bei Einstrahlung von Lichtpulsen von wenigen nJ Energiegehalt oder darunter, die auf Brennpunktdurchmesser von ca. $\leq 1\ \mu m$ Durchmesser fokussiert sind, ihre optischen Eigenschaften an den bestrahlten Stellen in einer der oben beschriebenen Weisen ändern.

Aufgabe der vorliegenden Erfindung war es, optische Aufzeichnungsmedien, mit Licht absorbierenden Schichten, zur Verfügung zu stellen, die diesen Anforderungen genügen, die einfach herzustellen, über lange Zeit stabil und korrosionsfrei und ungiftig sind. Außerdem sollten diese Aufzeichnungsmedien mittels Halbleiter-Laser beschrieben und gelesen werden können.

Es wurde gefunden, daß sehr gute für das Beschreiben und Lesen mittels eines Halbleiter-Lasers geeignete optische Aufzeichnungsmedien aus einem Träger und einer Licht absorbierenden Schicht vorliegen, wenn die lichtabsorbierende Schicht aus mindestens einen Farbstoff der Formel (I)

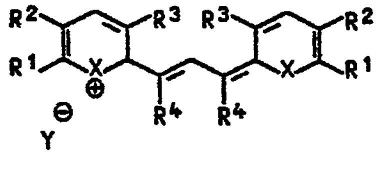

(I)

besteht oder mindestens einen Farbstoff der Formel (I) enthält, worin $R^1$, $R^2$, $R^3$ und $R^4$ unabhängig voneinander für $C_1$- bis $C_{10}$-Alkyl, für gegebenenfalls substituiertes Aryl, Aralkyl oder $C_1$- bis $C_5$-Alkoxy, X für S oder Se und $Y^{\ominus}$ für ein Anion stehen und wobei zwei benachbarte Reste $R^1$, $R^2$ und/oder $R^3$, $R^4$ gegebenenfalls auch für $-(CH_2)_3-$ oder $-(CH_2)_4-$ stehen.

Die mit den Methinfarbstoffen (I) erhältlichen optischen Aufzeichnungsmedien haben eine hohe Qualität z.B. einen hohen optischen Kontrast, ein sehr hohes Signal zu Rauschverhältnis und eine günstige Schwellenenergie, da die Methinfarbstoffe eine sehr hohe molare Absorption im Bereich von 700 -850 nm aufweisen. Die Farbstoffe (I) den weiteren Vorteil, daß sie in organischen Lösungsmitteln und/oder thermoplastischen oder vernetzten Kunststoffen gut löslich sind.

Aryl ist in (I) vorzugsweise Phenyl und Aralkyl Phenyl-$C_1$- bis $C_5$-alkyl.

Als Substituenten am Aryl bzw. Phenyl kommen z.B. $C_1$- bis $C_4$-Alkyl, $C_1$-bis $C_4$-Alkoxy, Halogen wie Fluor, vorzugsweise Brom und Chlor, in Betracht, wobei die Substituenten vorzugsweise in 4-Stellung stehen.

Für $R^1$, $R^2$, $R^3$ und $R^4$ sind Methyl, Phenyl, 4-Methylphenyl, 4-Methoxyphenyl, 4-Chlorphenyl und 4-Bromphenyl bevorzugt.

Weiterhin sind Farbstoffe (I) bevorzugt, in denen unabhängig voneinander $R^1$ und $R^2$ für $-(CH_2)_4-$ sowie $R^3$ und $R^4$ für $-(CH_2)_3-$ stehen.

$Y^{\ominus}$ steht für ein organisches oder anorganisches Anion, z.B. für $Cl^{\ominus}$, $J^{\ominus}$, $Br^{\ominus}$, $ClO_4^{\ominus}$, $CH_3COO^{\ominus}$, $C_3F_7COO^{\ominus}$, 4-$CH_3$-$C_6H_4$-$SO_3^{\ominus}$, 2-$CH_3$-$C_6H_4$-$SO_3^{\ominus}$ oder Gemischen davon.

Vorzugsweise steht $Y^{\ominus}$ für $Cl^{\ominus}$, $J^{\ominus}$, $Br^{\ominus}$ oder $ClO_4^{\ominus}$.

Im einzelnen sind folgende Farbstoffe der Formel (I) zu nennen:

| $R^1$ | $R^2$ | $R^3$ | $R^4$ | X | |
|---|---|---|---|---|---|
| $-(CH_2)_4-$ | | $-(CH_2)_3-$ | | S | $ClO_4$ |
| $CH_3$ | $CH_3$ | H | $CH_3$ | S | $ClO_4$ |
| $C_6H_5$ | H | H | $CH_3$ | S | Br |
| $C_6H_5$ | $C_6H_5$ | H | $C_6H_5$ | S | $ClO_4$ |
| $CH_3$ | $C_6H_5$ | H | $C_6H_5$ | S | $ClO_4$ |
| 4-$CH_3O$-$C_6H_5$ | H | H | $CH_3$ | S | Br |
| $C_6H_5$ | $C_6H_5$ | $-(CH_2)_3-$ | | S | $ClO_4$ |
| $-(CH_2)_4-$ | | $-(CH_2)_3-$ | | Se | $ClO_4$ |
| $CH_3$ | CH3 | H | $CH_3$ | Se | $ClO_4$ |
| $C_6H_5$ | H | H | $CH_3$ | Se | J |
| 4-Cl-$C_6H_4$ | H | H | $CH_3$ | Se | Br |
| 4-Br-$C_6H_4$ | H | H | $CH_3$ | Se | $ClO_4$ |
| 4-$CH_3$-$C_6H_4$ | H | H | $C_6H_5$ | Se | $ClO_4$ |
| 4-Cl-$C_6H_4$ | H | H | $C_6H_5$ | Se | $ClO_4$ |

Die Farbstoffe (I) werden durch Kondensation von Verbindungen der Formel (II)

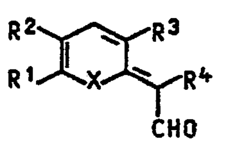

(II)

mit sich selbst in einem Gemisch aus Methanol/HCl bzw. Methanol/HBr erhalten (C.M. Pulst, A. Hautchmann, M. Müller, M. Weißenfels, Z. Chem. 24 (4), 146 (1984)).

Vorzugsweise enthält das Aufzeichnungsmedium den Farbstoff (I) in einem thermoplastischen oder vernetzten Polymeren.

Die erfindungsgemäßen Aufzeichnungssysteme haben bei der Wellenlänge der zur Informationsaufzeichnung üblicherweise verwendeten Laser (z.B. He-Ne-, Nd-Glas, Nd-YAG, GaAs-, GaAlAs- und andere geeignete Halbleiter-Injektionslaser) eine sehr hohe Absorption. Bevorzugt sind die Aufzeichnungssysteme, die bei der Emissionswellenlänge von Halbleiterlasern von ca. 750 bis 1100 nm eine sehr hohe Absorption aufweisen.

Die Polymerschichten können auf eine lichtreflektierende Schicht so aufgebracht werden, daß sich glatte Absorptionsschichten von optischer Qualität ergeben, in die die zu speichernde Information mit hohem Signal-zu-Rauschen-Verhältnis eingeschrieben werden kann.

Der Aufbau der Aufzeichnungsmedien ist an sich bekannt [J. Vac. Sci. Technol. 18 (1) Jan./Feb. 1981, S. 105].

Zwischen der lichtabsorbierenden Schicht und dem Träger ist gegebenenfalls eine reflektierende Schicht vorhanden, so daß das eingestrahlte und durch die farbige Schicht wandernde Licht (so weit es nicht absorbiert wird) an der Reflektorschicht reflektiert wird und nochmals durch die gefärbte Schicht wandert und absorbiert wird.

Die lichtreflektierende Schicht sollte so beschaffen sein, daß diese das zur Aufnahme und zur Abtastung verwendete Licht möglichst quantitativ reflektiert. Geeignete lichtreflektierenden Materialien sind z.B. Aluminium, Rhodium, Gold, Zinn, Blei, Wismut, Kupfer und dielektrische Spiegel. Die Dicke der lichtreflektierenden Schicht soll so groß sein, daß diese das zur Aufnahme oder zum Abtasten benutzte Licht möglichst vollständig reflektiert.

Für diesen Zweck sind Spiegel mit geringer Wärmeleitfähigkeit vorteilhaft. Träger, bzw. die Licht reflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen kann der Träger und/oder der Reflektor mit einer Glättungsschicht aus einem duroplastischen oder thermoplastischen Material versehen werden.

Das Aufbringen von metallischen Reflektionsschichten erfolgt vorzugsweise durch Aufdampfen im Vakuum oder auch durch Aufbringen geeigneter Metallfolien auf den Träger.

Die Belichtung kann auch durch ein transparentes Substrat erfolgen. Als Schichtfolge kommt dann Substrat-Absorberschicht - gegebenenfalls Reflektorschicht in Betracht.

Das Aufbringen der erfindungsgemäßen, gegen Laserlicht empfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht.

Für das Aufbringen der Absorptionsschichten nach der Technik des Aufschleuderns, Tauchens oder Rakelns bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Gemischen davon, eine Lösung bzw. eine Dispersion des Farbstoffs oder des Farbstoffgemisches, wobei das Lösungsmittel Polymere als Bindemittel enthalten kann.

Als Bindemittel kommen z.B. durch Strahlung oder Wärme härtbare Harze, wie Photopolymere, Silikonharze, Epoxidharze oder auch thermoplastische Kunststoffe in Betracht.

Bevorzugt sind thermoplastische Kunststoffe mit keinem oder nur sehr geringem kristallinen Anteil und Glastemperaturen von > 35 °C, insbesondere > 75 °C. Darüberhinaus müssen die Bindemittel wie Harze oder thermoplastische Kunststoffe, mit den Farbstoffen der Formel (I) gut verträglich sein. Geeignet sind beispielsweise wasserunlösliche Bindemittel mit hohem Lösungsvermögen für (I), wie (Meth)-Acrylatpolymere und -copolymere, Polystyrolhomo-und -copolymerisate, Polyvinylcarbazol, Polyvinylestercopolymere, Polyvinylchlorid und Celluloseester.

Die Farbstoffzubereitung wird dann durch Rakeln oder Tauchen, vorzugsweise aber durch Aufschleudern auf ein vorher gereinigtes oder vorbehandeltes ("subbing-layer") Substrat aufgebracht und die Schicht an der Luft getrocknet oder gehärtet. Der Film kann auch im Vakuum, bei erhöhter Temperatur oder gegebenenfalls unter Strahlung, getrocknet bzw. gehärtet werden.

Je nach Systemaufbau wird zuerst die Farbstoff-in-Polymer-Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Sofern die Farbstoff-in-Polymer-Schicht keine ausreichende mechanische Stabilität aufweist, kann diese mit einer transparenten Schutzschicht überzogen werden. Hierzu bieten sich eine Reihe von Polymeren an, welche durch Aufschleudern, Aufrekeln oder Tauchen von gelösten Polymeren oder durch Aufdampfen im Vakuum, insbesondere von fluorierten Polymeren, eine Schutzschicht bilden können.

Wenn das Aufzeichnungssystem aus zwei gleichen oder verschiedenen Aufzeichnungsmedien in Form eines "sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums verzichtet werden. Wenn auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Beim Einschreiben führt die beim Absorbieren des Laserlichtes entstehende Wärme zu einem radial nach außen gerichteten Fließen des Thermoplastes und somit zur Ausbildung von kantenscharfen "Löchern" wodurch dann beim Lesen ein ausgezeichnetes Signal/Rausch-Verhalten erzielt wird.

Die Erfindung soll durch folgende Beispiele näher erläutert werden.

Zur Herstellung von Aufzeichnungsmedien wurden folgende Farbstoffe (I) hergestellt.

Tabelle: Synthetisierte Farbstoffe

Farbstoff

1)

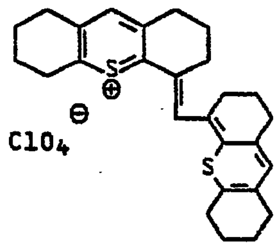

λ max: 806 nm
log ε: 4,34

2)

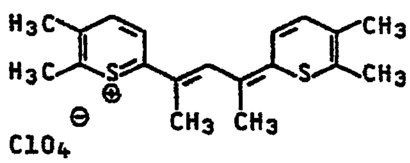

λ max: 761 nm
log ε: 4,56

3)

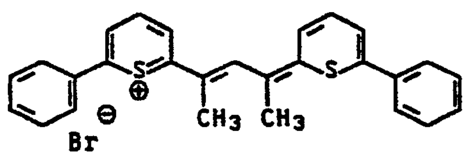

λ max: 800 nm
log ε: 4,71

4)

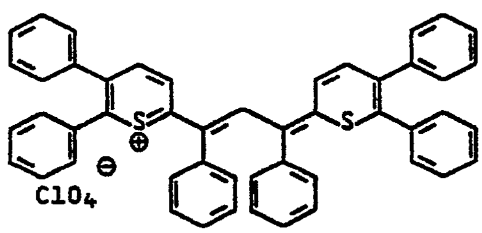

λ max: 766 nm
log ε: 4,78

5)

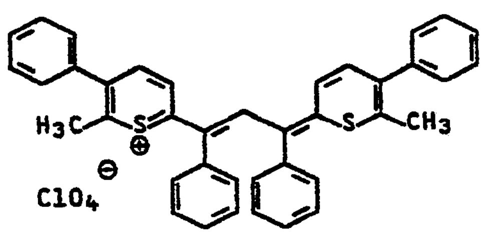

λ max: 781 nm
log ε: 4,60

6)

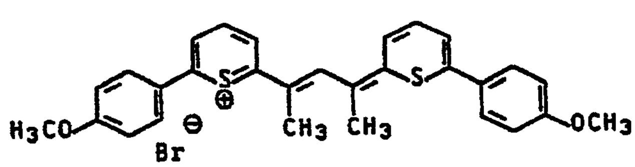

λ max: 782 nm
log ε: 4,80

Forts. Tabelle: Synthetisierte Farbstoffe

7) 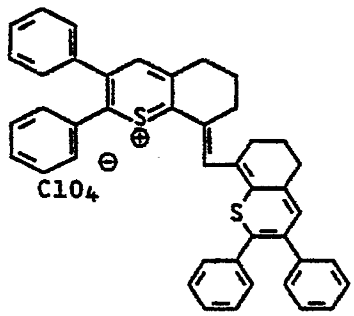

λ max: 837 nm

log ε: 4,48

8) 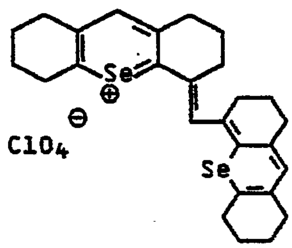

λ max: 800 nm

9) 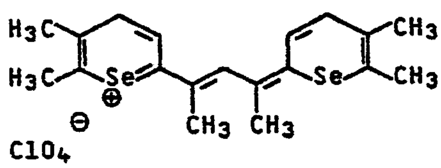

λ max: 800 nm

10) 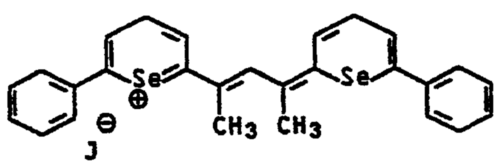

λ max: 808 nm

log ε: 4,04

11) 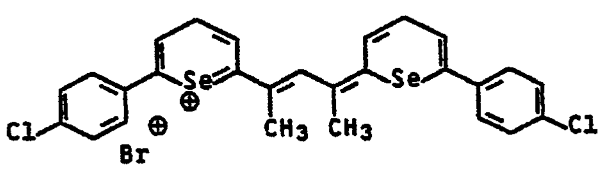

λ max: 802 nm

log ε: 4,67

Forts. Tabelle: Synthetisierte Farbstoffe

12) 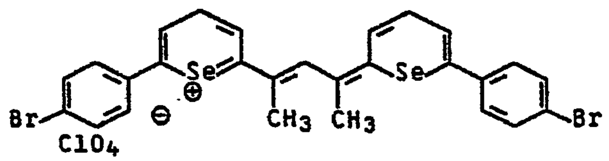

λ max: 805 nm
log ε: 4,16

13) 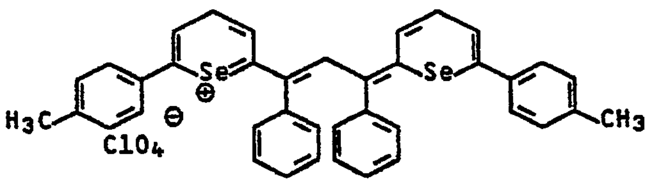

λ max: 800 nm

14) 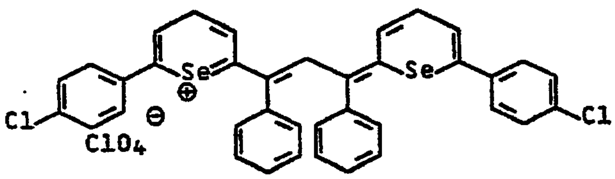

λ max: 800 nm

<u>Herstellung des optischen Aufzeichnungsmediums</u>

Zwei 1,2 mm dicke Polycarbonatscheiben mit einem Durchmesser von 120 nm und einem Innenlochdurchmesser von 15 mm werden mit Alkohol gereinigt und unter Reinraumbedingungen mit einer 0,3 µm starken Glättungsschicht aus einem Photopolymer beschichtet. Nach Aushärtung des Photopolymers mit UV-Licht wurde eine Lösung aus 1,0 g Farbstoff Nr. 7 und 1,3 g eines Copolymers aus Methylmethacrylat/Methacrylsäure (70:30 Gew.%) in 200 ml Essigester nach dem Schleuderbeschichtungsverfahren bei 4800 U/min auf die Platten aufgetragen. Nach dem Trocknen betrug die Schichtdicke 0,26 µm. In einer Vakuumbedampfungsapparatur wurde ein Aluminiumspiegel in einer Schichtdicke von 0,03 µm auf die Farbschicht aufgebracht und darauf eine Schutzschicht von 1,2 µm aus Polystyrol in Xylol aufgeschleudert.

Beide Platten werden sandwichartig mit den beschichteten Seiten nach innen über geeignete Abstandsringe zusammengeklebt, so daß ein Luftspalt von 0,4 mm verblieb. Mit einem auf einem Drehtisch montierten AlGaAs-Laser (λ = 820 nm) wurden einzelne, etwa 1 µ große Löcher in die aktive Schicht geschrieben. Die Empfindlichkeit der Schicht war besser als 1 nJ/Loch, beim Auslesen der Punkte wurde ein ausgezeichnetes Signal/Rausch-Verhältnis gefunden.

Entsprechend gute Ergebnisse wurden erhalten, wenn der Farbstoff 7 durch einen der Farbstoffe 1 bis 6 oder 8 bis 14 ersetzt wurde.

**Patentansprüche**

1. Optische Aufzeichnungsmedien aus einem Träger und einer Licht absorbierenden Schicht, <u>dadurch gekennzeichnet</u>, daß die Licht absorbierende Schicht aus mindestens einem Farbstoff der Formel

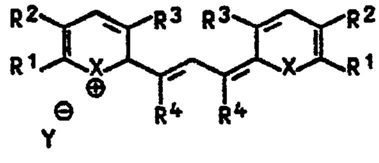

besteht oder die Licht absorbierende Schicht mindestens einen Farbstoff dieser Formel enthält, worin $R^1$, $R^2$, $R^3$ und $R^4$ unabhängig voneinander für $C_1$- bis $C_{10}$-Alkyl, für gegebenenfalls substituiertes Aryl, Aralkyl oder $C_1$- bis $C_5$-Alkoxy, X für S oder Se und $Y^{\ominus}$ für ein Anion stehen und wobei zwei benachbar-

te Reste $R^1$, $R^2$ und/oder $R^3$, $R^4$ gegebenenfalls auch für -$(CH_2)_3$- oder -$(CH_2)_4$- stehen.

2. Optische Aufzeichnungsmedien gemäß Anspruch 1, dadurch gekennzeichnet, daß in der Formel $R^1$, $R^2$, $R^3$ und $R^4$ unabhängig voneinander für $C_1$- bis $C_{10}$-Alkyl, für gegebenenfalls durch $C_1$- bis $C_4$-Alkyl, $C_1$- bis $C_4$-Alkoxy, Fluor, Brom oder Chlor substituiertes Phenyl, für Phenyl-$C_1$- bis $C_5$-alkyl oder $C_1$- bis $C_5$-Alkoxy stehen, wobei zwei benachbarte Reste $R^1/R^2$ oder $R^4/R^4$ oder $R^1/R^2$ und $R^3/R^4$ gegebenenfalls auch für -$(CH_2)_3$- oder -$(CH_2)_4$- stehen können, und X und $Y^\ominus$ die im Anspruch 1 angegebene Bedeutung haben.

3. Optische Aufzeichnungsmedien gemäß Anspruch 2, dadurch gekennzeichnet, daß in der Formel $R^1$, $R^2$, $R^3$ und $R^4$ unabhängig voneinander für Methyl, Phenyl, 4-Methylphenyl, 4-Methoxyphenyl, 4-Chlorphenyl oder 4-Bromphenyl stehen und wobei auch zwei benachbarte Reste $R^1$ und $R^2$ für -$(CH_2)_4$ und/oder zwei benachbarte Rest $R^3$ und $R^4$ für -$(CH_2)_3$-stehen können und X und Y die im Anspruch 1 angegebene Bedeutung haben.

4. Optische Aufzeichnungsmedien gemäß den Ansprüchen 1 bis 3, dadurch gekennzeichnet, daß in der Formel $Y^\ominus$ für $Cl^\ominus$, $Br^\ominus$, $J^\ominus$, $ClO_4^\ominus$, $CH_3COO^\ominus$, $C_3F_7COO^\ominus$, 4-$CH_3$-$C_6H_4$-$SO_3^\ominus$, 2-$CH_3$-$C_6H_4$-$SO_3^\ominus$ oder Gemischen davon steht.

5. Optische Aufzeichnungsmedien gemäß Anspruch 4, dadurch gekennzeichnet, daß in der Formel $Y^\ominus$ für $Cl^\ominus$, $J^\ominus$, $Br^\ominus$ oder $ClO_4^\ominus$ steht.

**Claims**

1. An optical recording material consisting of a base and a light-absorbing layer, wherein the said layer consists of or contains one or more dyes of the formula

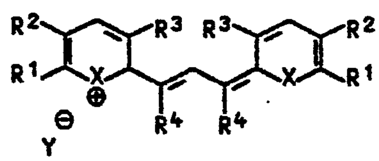

where $R^1$, $R^2$, $R^3$ and $R^4$ independently of one another are each $C_1$–$C_{10}$-alkyl, $C_1$–$C_5$-alkoxy, unsubstituted or substituted aryl or aralkyl, X is S or Se and $Y^\ominus$ is an anion, and two adjacent radicals $R^1$, $R^2$ and/or $R^3$, $R^4$ may furthermore be $-(CH_2)_3-$ or $-(CH_2)_4-$.

2. An optical recording material as claimed in claim 1, wherein, in the formula, $R^1$, $R^2$, $R^3$ and $R^4$ independently of one another are each $C_1$–$C_{10}$-alkyl, $C_1$–$C_5$-alkoxy, phenyl which is unsubstituted or substituted by $C_1$–$C_4$-alkyl, $C_1$–$C_4$-alkoxy, fluorine, bromine of chlorine, or phenyl-$C_1$–$C_5$-alkyl, and two adjacent radicals $R^1/R^2$ or $R^3/R^4$ or $R^1/R^2$ and $R^3/R^4$ may furthermore be $-(CH_2)_3-$ or $-(CH_2)_4-$, and X and $Y^\ominus$ have the meanings stated in claim 1.

3. An optical recording material as claimed in claim 2, wherein, in the formula, $R^1$, $R^2$, $R^3$ and $R^4$ independently of one another are each methyl, phenyl, 4-methylphenyl, 4-chlorophenyl or 4-bromophenyl, and furthermore two adjacent radicals $R^1$ and $R^2$ may be $-(CH_2)_4-$ and/or two adjacent radicals $R^3$ and $R^4$ may be $-(CH_2)_3-$, and X and Y have the meanings stated in claim 1.

4. An optical recording material as claimed in claim 1 or 2 or 3, wherein, in the formula, $Y^\ominus$ is $Cl^\ominus$, $Br^\ominus$, $I^\ominus$, $ClO_4^\ominus$, $CH_3COO^\ominus$, $C_3F_7COO^\ominus$, 4–$CH_3$–$C_6H_4$–$SO_3^\ominus$, 2–$CH_3$–$C_6H_4$–$SO_3^\ominus$ or a mixture of these.

5. An optical recording material as claimed in claim 4, wherein, in the formula, $Y^\ominus$ is $Cl^\ominus$, $I^\ominus$, $Br^\ominus$ or $ClO_4^\ominus$.

**Revendications**

1. Supports d'enregistrement optique se composant d'un substrat et d'une couche absorbant la lumière, caractérisés en ce que la couche absorbant la lumière est faite d'au moins un colorant de formule

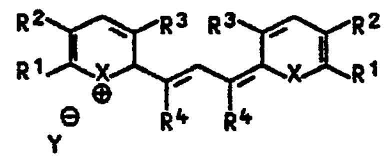

ou la couche absorbant la lumière contient au moins un colorant répondant à cette formule, dans laquelle $R^1$, $R^2$, $R^3$ et $R^4$ sont mis chacun, indépendamment les uns des autres, pour un reste alkyle en $C_1$ à $C_{10}$, aryle éventuellement substitué, aralkyle ou alcoxy en $C_1$ à $C_5$, X est mis pour S ou Se et $Y^-$ est mis pour un anion, deux restes $R^1$, $R^2$ et/ou $R^3$ et $R^4$ voisins pouvant être également mis, le cas échéant, pour $-(CH_2)_3-$ ou $-(CH_2)_4-$.

2. Supports d'enregistrement optique selon la revendication 1, caractérisés en ce que, dans la formule, $R^1$, $R^2$, $R^3$ et $R^4$ sont mis chacun, indépendamment les uns des autres, pour un reste alkyle en $C_1$ à $C_{10}$, pour un reste phényle éventuellement substitué par un radical alkyle en $C_1$ à $C_4$, alcoxy en $C_1$ à $C_4$ ou par un atome de fluor, de brome ou de chlore, pour un reste phénylalkyle en $C_1$ à $C_5$ ou pour un reste alcoxy en $C_1$ à $C_5$, deux restes $R^1/R^2$ ou $R^3/R^4$ ou $R^1/R^2$ et $R^3/R^4$ voisins pouvant être également mis, le cas échéant, pour $-(CH_2)_3-$ ou $-(CH_2)_4-$, et X et $Y^-$ ont les significations données dans la revendication 1.

3. Supports d'enregistrement optique selon la revendication 2, caractérisés en ce que, dans la formule, $R^1$, $R^2$, $R^3$ et $R^4$ sont mis chacun, indépendamment les uns des autres, pour un reste méthyle, phényle, 4-méthylphényle, 4-méthoxyphényle, 4-chlorophényle ou 4-bromophényle, deux restes $R^1$ et $R^2$ voisins pouvant être également mis pour $-(CH_2)_4-$ et/ou deux restes $R^3$ et $R^4$ voisins pouvant être mis pour $-(CH_2)_3-$, et X et $Y^-$ ont les significations données dans la revendication 1.

4. Supports d'enregistrement optique selon l'une quelconque des revendications 1 à 3, caractérisés en ce que, dans la formule, $Y^\ominus$ est mis pour $Cl^\ominus$, $Br^\ominus$, $I^\ominus$, $ClO_4^\ominus$, $CH_3COO^\ominus$, $C_3F_7COO^\ominus$, $4-CH_3-C_6H_4-SO_3-$, $2-CH_3-C_6H_4-SO_3-$ ou pour des mélanges de ceux-ci.

5. Supports d'enregistrement optique selon la revendication 4, caractérisés en ce que, dans la formule, $Y^\ominus$ est mis pour $Cl^\ominus$, $I^\ominus$, $Br^\ominus$ ou $ClO_4^\ominus$.